(19) Europäisches Patentamt
European Patent Office
Office européen des brevets

(11) EP 2 692 833 A1

(12) EUROPEAN PATENT APPLICATION
published in accordance with Art. 153(4) EPC

(43) Date of publication:
05.02.2014 Bulletin 2014/06

(51) Int Cl.:
C10G 2/00 (2006.01)

(21) Application number: 12764763.4

(22) Date of filing: 22.03.2012

(86) International application number:
PCT/JP2012/001965

(87) International publication number:
WO 2012/132336 (04.10.2012 Gazette 2012/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.03.2011 JP 2011078804

(71) Applicants:
• Japan Oil, Gas and Metals National Corporation
Tokyo 105-0001 (JP)
• INPEX Corporation
Tokyo 107-6332 (JP)
• JX Nippon Oil & Energy Corporation
Chiyoda-ku
Tokyo 100-8162 (JP)
• Japan Petroleum Exploration Co., Ltd.
Tokyo 100-0005 (JP)
• Cosmo Oil Co., Ltd.
Tokyo 105-8528 (JP)
• Nippon Steel & Sumikin Engineering Co., Ltd.
Tokyo 141-8604 (JP)

• Chiyoda Corporation
Kanagawa 220-8765 (JP)

(72) Inventors:
• KAWAZUISHI, Kenichi
Yokohama-shi
Kanagawa 220-8765 (JP)
• YAGI, Fuyuki
Yokohama-shi
Kanagawa 220-8765 (JP)
• WAKAMATSU, Shuhei
Yokohama-shi
Kanagawa 220-8765 (JP)
• MIKURIYA, Tomoyuki
Yokohama-shi
Kanagawa 220-8765 (JP)

(74) Representative: Hartz, Nikolai
Wächtershäuser & Hartz
Patentanwaltspartnerschaft
Ottostrasse 4
80333 München (DE)

(54) METHOD FOR REMOVING HEAVY HYDROCARBON

(57) Heavy hydrocarbons contained in FT off gas of a GTL process are removed by bringing the FT off gas into contact with absorption oil, by introducing the FT off gas into a distillation tower, by cooling the FT off gas or by driving the FT off gas into an adsorbent. A burner tip for heating a reformer tube, using FT off gas as fuel, is prevented from being plugged by the deposition of heavy hydrocarbons contained in the FT off gas.

*FIG. 1*

EP 2 692 833 A1

Printed by Jouve, 75001 PARIS (FR)

**Description**

[Technical Field]

This invention relates to a method of removing heavy hydrocarbons contained in off gas produced from the Fischer-Tropsch reaction step of the gas-to-liquid (GTL) process and utilizing the treated off gas as fuel in the synthesis gas production step of the GTL process.

[Background Art]

Natural gas is regarded as a promising fuel that places less load to the environment as compared with petroleum-based fuels because, when combusted, natural gas gives off neither sulfur oxides nor particulate substances that will contaminate the environment and produces less carbon dioxide per unit amount of generated heat.

For this reason, natural gas is increasingly attracting attention as an alternative fuel that can replace petroleum in the field of energy supply because solutions to the above environmental problems are urgently being looked for and diverse resources are required all over the world.

The GTL technology is known to provide methods of producing liquid synthetic hydrocarbons such as naphtha, kerosene, gas oil and so on by way of chemical reactions using natural gas as a raw material. Processes based on the GTL technology generally include a step of producing synthesis gas (i.e. a gaseous mixture of carbon monoxide and hydrogen) by way of a reforming reaction (synthesis gas production step), a step of producing synthesis oil containing straight chain hydrocarbons as main components from the synthesis gas by way of a Fischer-Tropsch (FT) synthesis reaction (FT synthesis step) and a step of turning the synthesis oil into product oil by way of a hydrotreating, Hydroisomerization and hydrocracking reaction (upgrading step).

Synthesis gas is produced by way of a reforming reaction of natural gas. Known techniques for producing synthesis gas, utilizing a reforming reaction, include the steam reforming method, the $CO_2$ reforming method, the autothermal reforming method (ATR), the catalytic partial oxidation method (CPOX) and the direct partial oxidation method (POX).

From the viewpoint of underlying principles, reforming reactions are roughly classified into: steam reforming reaction of producing synthesis gas by adding steam to natural gas, following the reaction equation (1) shown below; and carbon dioxide reforming reaction of producing synthesis gas by adding carbon dioxide to natural gas or by using carbon dioxide contained in natural gas, following the reaction equation (2) shown below. Note that reforming reactions of methane contained in natural gas are represented as examples in the equations shown below.

$$\text{equation (1):} \quad CH_4 + H_2O \rightarrow CO + 3H_2$$
$$\Delta H_{298} = +206 kJ/mol$$

$$\text{equation (2):} \quad CH_4 + CO_2 \rightarrow 2CO + 2H_2$$
$$\Delta H_{298} = +248 kJ/mol$$

As seen from the above equation (1) and (2), both of the above listed reforming reactions are endothermic reactions, meaning that the heat necessary for carrying out the reactions needs to be externally supplied. In this regard, in the case of ATR, CPOX and POX, the reforming reaction is driven to proceed by completely oxidizing a part of the raw material natural gas by means of a burner and/or a catalyst and using the heat that is generated when carbon dioxide and water are produced from hydrocarbons such as methane. Therefore, the overall reaction system is an exothermic reaction and hence no heat needs to be externally supplied.

In the case of the steam reforming method and the $CO_2$ reforming method, on the other hand, a reformer tube that is filled with a catalyst is arranged in a furnace and the heat necessary for the reforming reaction is externally supplied by using a heating means such as a burner.

The steam reforming method and the $CO_2$ reforming method require a large amount of heat for the reforming reactions particularly when synthesis gas needs to be produced on a large scale. Hence, since a large reforming equipment needs to be installed, a scale merit is hardly exploited. For this reason, ATR and POX are believed to be suitable for large scale production.

However, both ATR and POX involve a step for adding oxygen to natural gas, which requires an oxygen plant that is highly costly. Additionally, since heat is produced to a large extent when oxygen is added to natural gas, a risk of explosion exists. This means that designing and running an oxygen plant are subjected to various restrictions.

On the other hand, both the steam reforming method and the $CO_2$ reforming method provide an advantage that, since oxygen is not introduced into natural gas and their reforming reactions themselves are endothermic, synthesis gas can be produced in safe. Additionally, when the steam reforming method and the $CO_2$ reforming method are concurrently employed, the hydrogen/carbon monoxide ratio in the produced synthesis gas can be brought close to 2.0, which is advantageous for the subsequent FT synthesis reaction.

As for the disadvantage of the steam reforming method and the $CO_2$ reforming method of externally supplying heat, the efficiency of energy use of the overall GTL process can be improved by reutilizing the FT off gas produced from the subsequent FT synthesis step as fuel for heating the reformer tube. FT off gas refers to gas containing the synthesis gas left unreacted and other gases such as methane that are secondarily produced in the FT synthesis step.

In the FT synthesis step, a unit (-$CH_2$-) of a hydrocarbon chain is produced from hydrogen and carbon monoxide and such units are synthetically combined to grow hydrocarbon chain. This reaction is an exothermic reaction as a whole that is expressed by the reaction equation (3) shown below.

$$\text{equation (3):} \quad (2n + 1)H_2 + nCO \rightarrow C_nH_{2n+2} + nH_2O$$
$$\Delta H_{298} = -167kJ/mol\text{-}CO$$

The number of carbon atoms of the hydrocarbons produced from the FT synthesis reaction is not fixed and hydrocarbons showing various degrees of polymerization (n numbers) are produced. The ratio of the number of the units (-$CH_2$-) that are actually used for the growth of hydrocarbon chains to the total number of the produced units is referred to as chain growth probability $\alpha$ and the extent to which hydrocarbon chains showing a certain degree of polymerization are produced is determined by the chain growth probability $\alpha$ (Anderson-Schulz-Flory distribution). In the FT synthesis step, the reaction is conducted with $\alpha > 0.85$ that boosts the production of the kerosene and gas oil fraction, which is the main target of the GTL process, or $\alpha > 0.90$ that boosts the production of the heavier wax fraction, from which kerosene and gas oil can be obtained by hydrocracking. However, lighter hydrocarbons that cannot be satisfactorily grown are also produced to a small extent even with an $\alpha$ value in the above cited region. Furthermore, not all the synthesis gas fed to the FT synthesis step is consumed and the hydrogen and the carbon monoxide that are supplied are partly left unreacted.

Hydrocarbons having a large number of carbon atoms and showing a high boiling point that are the target of the FT synthesis reaction are taken out as liquid components, while $H_2O$ and lighter hydrocarbons such as methane and ethane that are byproducts of the reaction as well as unreacted hydrogen and carbon monoxide are taken out as mixed gaseous components. Of these, hydrogen and carbon monoxide can be reutilized in the FT synthesis reaction. Therefore, $H_2O$ and other unnecessary substances are removed from the mixed gaseous components by cooling and condensing the gaseous components by means of cooling water and the mixture gas containing hydrogen, carbon monoxide, methane, ethane and other low boiling point hydrocarbons that are not condensed are recycled to the FT synthesis reaction. However, since methane and some other hydrocarbons do not react further even if led back to the FT synthesis reaction, the ratio of methane contained in the gaseous components gradually rises. To prevent the methane and some other hydrocarbons from being accumulated in the FT synthesis reaction system, part of the mixture gas is drawn out and removed as off gas (FT off gas). The off gas produced in this way contains combustible components such as methane to a large extent and hence it can be used as fuel for heating the reformer tube.

[Summary of Invention]

[Technical Problem]

However, FT off gas contains a small extent of heavy hydrocarbons that are the target product of the FT synthesis reaction. Particularly, heavy hydrocarbons having five or more carbon atoms per molecule can be thermally decomposed or polymerized and deposited as liquid or solid substances when heated. Therefore, when off gas is used as fuel for heating the reformer tube without being preprocessed, the deposited heavy hydrocarbons can plug a tip of the burner for heating the reformer tube to prevent the burner from stably operating for heating and consequently reduce the efficiency of the GTL process.

[Solution to Problem]

As a result of intensive research efforts, the inventors of the present invention completed this invention as means for solving the above-identified problem. According to the present invention, there is provided a method of producing various hydrocarbon oils from natural gas including:

a synthesis gas production step of producing synthesis gas containing hydrogen and carbon monoxide as main components by causing natural gas containing methane as main component to react with steam and/or carbon dioxide in a heated reformer tube filled with a reforming catalyst;

a Fischer-Tropsch synthesis step of producing Fischer-Tropsch oil by subjecting the synthesis gas produced in the synthesis gas production step to a Fischer-Tropsch reaction and subsequently separating FT off gas containing gaseous products and unreacted synthesis gas; and

an upgrading step of producing various hydrocarbon oils by subjecting the Fischer-Tropsch oil to a hydrotreating, hydroisomerization and hydrocracking process, wherein

the FT off gas is recycled as a fuel for heating the reformer tube after heavy hydrocarbons contained in the FT off gas is removed.

[Advantageous Effects of Invention]

According to the present invention, heavy hydrocarbons having five or more carbon atoms per molecule that are contained in the FT off gas are removed before the FT off gas is supplied to the burner. Thus, the burner tip is prevented from being plugged as a result of thermal decomposition or polymerization of such heavy hydrocarbons, and the reformer tube is allowed to stably operate for a long period. Additionally, since FT off gas can be utilized effectively as fuel, the efficiency of energy use of the overall GTL process can be improved.

[Brief Description of Drawings]

[FIG. 1]

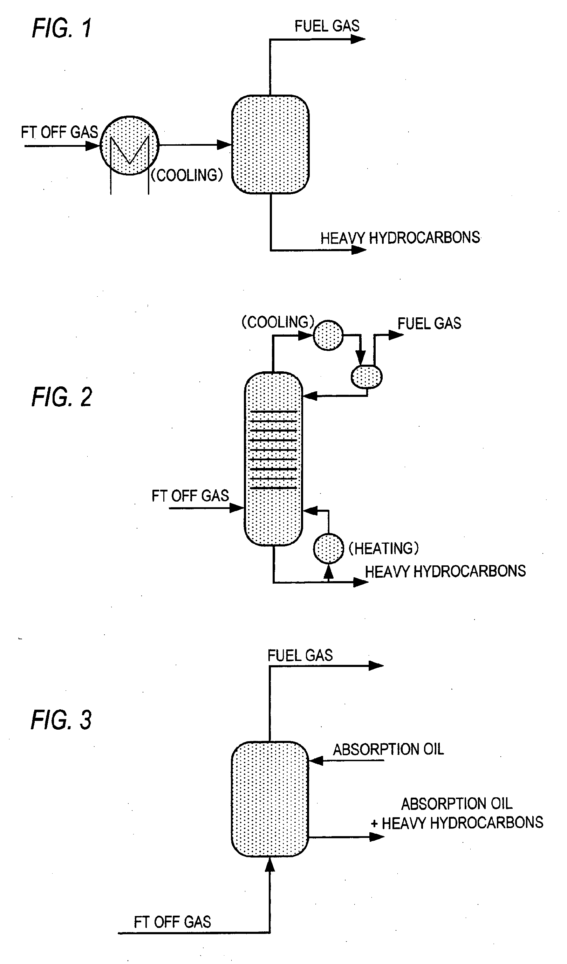

FIG. 1 is a schematic illustration of the method  of removing heavy hydrocarbons in Example 1.
[FIG. 2]
FIG. 2 is a schematic illustration of the method of removing heavy hydrocarbons in Example 2.
[FIG. 3]
FIG. 3 is a schematic illustration of the method of removing heavy hydrocarbons in Example 3.
[FIG. 4]

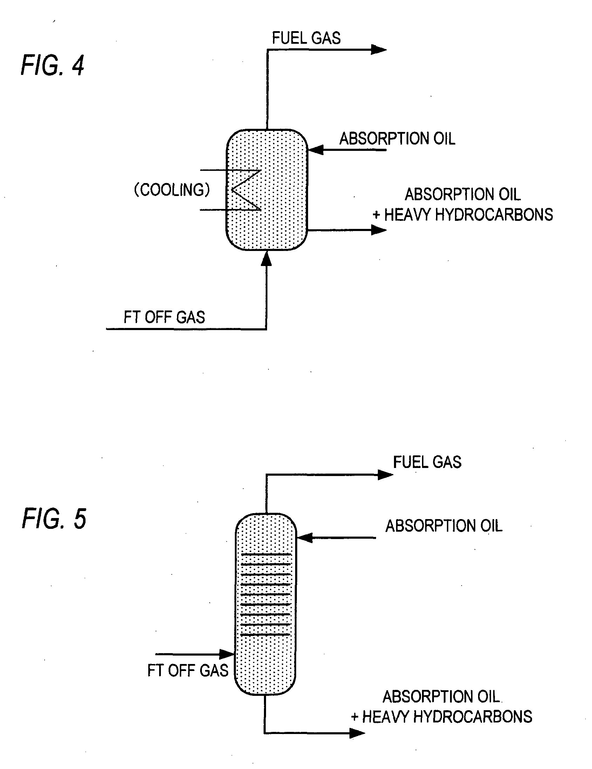

FIG. 4 is a schematic illustration of the method of removing heavy hydrocarbons in Example 4.
[FIG. 5]
FIG. 5 is a schematic illustration of the method of removing heavy hydrocarbons in Example 5.

[Description of Embodiments]

Embodiments of a method of recycling FT off gas as fuel for a synthesis gas production step according to the present invention will be described below.

The synthesis gas produced by means of a reforming reaction is driven to flow into a bubble tower reactor installed on the way of the FT synthesis step from the bottom thereof. The bubble tower reactor is filled with slurry consisting of liquid hydrocarbons produced as a result of an FT synthesis reaction and catalyst particles. When the synthesis gas rises through the slurry contained in the tower, hydrocarbons are produced as a result of an FT synthesis reaction between carbon monoxide and hydrogen gas.

Of the synthesized hydrocarbons, liquid ones are led into a separator as slurry along with catalyst particles. The solid components such as catalyst particles and the liquid components including liquid hydrocarbons are separated from each other in the  separator. The separated solid components are then returned to the bubble tower reactor. The liquid components, on the other hand, are supplied to a distillation tower and heated for fractional distillation of producing a naphtha fraction (boiling point: about 150°C or lower), a kerosene/gas oil fraction (boiling point: about 150°C to 350°C) and a wax fraction (boiling point: about 350°C or higher). Subsequently, each fraction is fed to the upgrading step.

On the other hand, the gaseous components including unreacted synthesis gas and synthesized gaseous hydrocarbons are discharged from the top of the bubble tower reactor and supplied to a hydrocarbon collector. Any type of hydrocarbon collector can be used. A hydrocarbon collector to be used herein typically cools the gaseous components by means of a heat exchanger using cooling water and separates the liquid components including condensed water and liquid hydrocarbons from the gaseous components that are left uncondensed. Among the separated liquid components, water is removed and liquid hydrocarbons are led into the distillation tower. The gaseous components left in the hydrocarbon collector after the separation mainly include unreacted synthesis gas and light hydrocarbons such as methane and ethane, but they also include heavy hydrocarbons, which are also left there by a small amount. The gaseous components are reintroduced into a bottom section of the bubble tower reactor and reutilized for the FT synthesis reaction. At this time, a part of the reintroduced gaseous components is drawn out and discharged as off gas (FT off gas) in order to prevent accumulation of methane, ethane and the like which does not react further in the bubble tower reactor, and the FT off gas is utilized as fuel gas for heating the reformer tube for the reforming reaction in the synthesis gas production step.

However, thus discharged FT off gas that is to be recycled and utilized as fuel gas for the reforming reaction also contains heavy hydrocarbons by a small amount. When off gas containing such heavy hydrocarbons is utilized as fuel gas, the contained heavy hydrocarbons are deposited by way of thermal decomposition and polymerization and plug the burner tip to become an obstacle for the operation of stably heating the reformer tube for a long period. According to the present invention, this problem is dissolved by removing the heavy hydrocarbons contained in FT off gas before the FT off gas is utilized as fuel for heating a reformer tube.

Now, the present invention will be described in more detail by way of preferred embodiments of the method of removing heavy hydrocarbons according to the present invention. Note, however, that the present invention is by no means limited to the following embodiments.

The first embodiment of the present invention is a method of bringing FT off gas into contact with absorption oil directly in order to absorb the heavy hydrocarbons contained in FT off gas by the absorption oil.

While any oil can be used as the absorption oil so long as it can absorb hydrocarbons having five or more carbon atoms per molecule contained in FT off gas, relatively light kerosene or gas oil may preferably be used. The kerosene fraction or the gas oil fraction that is a final product of a GTL process, for example, can be used. Alternatively, if appropriate intermediate oil is available in a GTL process, such oil may be used. The kerosene or gas oil fraction obtained as a result of fractional distillation by a distillation tower or a product obtained by hydrotreating such a fraction may be used as the intermediate oil.

Similarly, the conditions of absorption are not subjected to any particular limitations and it can be appropriately selected depending on the absorption oil to be used and other considerations. However, the temperature is preferably between 10°C and 50°C and close to the room temperature and the pressure is preferably between 2.4 MPaG and 3.2 MPaG from the viewpoint of preventing absorption oil from evaporating.

The second embodiment of the present invention is a method of introducing FT off gas into a distillation tower and distilling and separating the heavy hydrocarbons contained in the FT off gas.

Any distillation tower can be used so long as it can separate hydrocarbons having five or more carbon molecule per molecule from the FT off gas introduced in it by distillation. A distillation tower may be additionally installed for a GTL process that embodies the present invention. However, if a distillation tower that can separate hydrocarbons having five or more carbons per molecule from the FT off gas introduced therein exists in a GTL process, the FT off gas may be introduced in it. For example, a distillation tower is normally operated to separate the product (hydrogenated naphtha), obtained by hydroprocessing the naphtha fraction drawn from the top of a distillation tower, into liquid naphtha and gas containing light hydrocarbons as main components. Then, FT off gas may be introduced into such a distillation tower and the gas obtained as a result of such separation may be used as fuel for heating a reformer tube.

While the conditions of distillation are not subjected to any particular limitations, preferably the operation of distillation is conducted with a temperature between -50°C and 40°C and a pressure level between 2.4 MPaG and 3.2 MPaG at the tower top.

The third embodiment of the present invention is a method of cooling FT off gas and condensing and separating the heavy hydrocarbons contained in it.

While the cooling conditions are not subjected to any particular limitations so long as the hydrocarbons having five or more carbon atoms per molecule contained in FT off gas are separated under the selected conditions, preferably the temperature is between 5°C and 20°C and the pressure is between 2.4 MPaG and 3.2 MPaG for example. Similarly, any cooling method can be used. For example, cooling water or a heat exchanger using water discharged from the GTL process may be used.

The fourth embodiment of the present invention is a method of removing the heavy hydrocarbons contained in FT off gas by adsorption.

While any adsorbent can be used so long as it can separate the hydrocarbons having five or more carbon atoms per molecule contained in FT off gas, active carbon can be employed to adsorb the hydrocarbons for instance. When active carbon is employed, the operating condition of an adsorption is preferably such that the temperature is between 20°C and 40°C and the pressure level is between 0 MPaG and 3.2 MPaG. Additionally, the active carbon is preferably regenerated by way of a steaming treatment that is conducted at a temperature between 100°C and 150°C and a pressure level between 0 MPaG and 0.35 MPaG. With this method, two adsorption towers may preferably be installed in a GTL process and operated alternately for adsorption and regeneration. Then, the adsorption towers can be operated continuously.

Any of the above-described first through fourth embodiments may not necessarily be adopted alone. In other words, the advantages of the present invention can be boosted when, for example, FT off gas is brought into contact with absorption oil (the first embodiment) or an adsorbent is applied thereto (the fourth embodiment) while the FT off gas is being cooled (the second embodiment).

Now, the present invention will be described by way of examples for the purpose of better understanding of the present invention. However, the present invention is by no means limited by the examples.

[Example 1]

Gas produced from an FT synthesis step in a plant using GTL technology, that includes unreacted synthesis gas and gaseous hydrocarbons, was cooled and the gas phase and the liquid phase were separated from each other to obtain FT off gas having a composition shown in Table 1. Note that, in Table 1, Cn denotes hydrocarbons having n carbon atoms per molecule and C5+ denotes hydrocarbons having five or more carbon atoms per molecule. The temperature and the pressure of the obtained FT off gas was respectively 45°C and 2.75 MPaG and the flow rate of the FT off gas was 1,000 kmol/h (= 15,284 kg/h). The content of the heavy hydrocarbons having five or more carbon atoms per molecule was 4.32 wt%.

[Table 1]

| Components of FT off gas | Composition ratio (mol%) |
| --- | --- |
| $H_2$ | 27.29 |
| $N_2$ | 0.16 |
| CO | 15.56 |
| $CO_2$ | 0.58 |
| $H_2O$ | 0.45 |
| C1 | 53.40 |
| C2 | 0.39 |
| C3 | 0.81 |
| C4 | 0.48 |
| C5+ | 0.79 |
| Total | 100.00 |

The obtained FT off gas was cooled to 10°C under a pressure level of 2.7 MPaG and the condensed liquid components were separated from the uncondensed fuel gas. Then, the heavy hydrocarbons contained in the liquid components were collected (FIG. 1). Subsequently, the content of the heavy hydrocarbons having five or more than five carbon atoms per molecule contained in the fuel gas were measured.

[Example 2]

The FT off gas obtained in Example 1 was introduced into a distillation tower and the fuel gas drawn from the tower top and the liquid components drawn from the tower bottom were separated from each other (FIG. 2). The pressure of the FT off gas at the tower top was 2.65 MPaG and the temperature at the tower bottom was 198°C while the temperature at the tower top was -37°C. Thereafter, the content of the heavy hydrocarbons having five or more carbon atoms per molecule contained in the fuel gas that was obtained at the tower top was measured.

[Example 3]

The FT off gas obtained in Example 1 was brought into contact with absorption oil that was equivalent to gas oil in a single stage under conditions of a pressure level of 2.7 MPaG and a temperature of 48°C of the FT off gas and the heavy hydrocarbons absorbed in the absorption oil were collected (FIG. 3). Table 2 shows the distillation property of the employed absorption oil. The flow rate of the absorption oil was 10,000 kg/h. Thereafter, the content of the hydrocarbons having five or more carbon atoms per molecule that were contained in the fuel gas and not absorbed by the absorption oil was measured.

[Table 2]

| Distillation (%) | (°C) |
|---|---|
| 5 | 250 |
| 10 | 264 |
| 20 | 271 |
| 50 | 296 |
| 80 | 335 |
| 90 | 361 |
| 95 | 382 |

[Example 4]

The temperature at which the FT off gas was brought into contact with absorption oil in Example 3 was lowered to 10°C and the heavy hydrocarbons were collected (FIG. 4). The flow rate of the absorption oil was 10,000 kg/h. Thereafter, the content of the heavy hydrocarbons having five or more carbon atoms per molecule that were contained in the fuel gas and not  absorbed by the absorption oil was measured.

[Example 5]

The FT off gas same as that of Example 3 was brought into contact with absorption oil by means of an 8-stage absorption tower to collect the heavy hydrocarbons (FIG. 5). The pressure of the FT off gas at the tower top was 2.65 MPaG and the temperature at the tower bottom was 49°C while the temperature at the tower top was 50°C. The flow rate of the absorption oil was 10,000 kg/h. Thereafter, the content of the heavy hydrocarbons having five or more carbon atoms per molecule that were contained in the fuel gas and not absorbed by the absorption oil was measured.

[Examples 6 through 8]

In Examples 6 through 8, experiments respectively same as those of Examples 3 through 5 were conducted except that the flow rate of absorption oil was doubled to 20,000 kg/h.
Table 3 shows the content of the heavy hydrocarbons having five or more carbon atoms per molecule contained in the fuel gas that was obtained after removing heavy hydrocarbons, the flow rate of the collection liquid or the absorption oil and the ratio by which the heavy hydrocarbons contained in the FT off gas were distributed to the collection oil or the absorption oil of each of Examples 1 through 8. In each of the examples, the effect of removing heavy hydrocarbons from fuel gas was proved.

[Table 3]

| | fuel gas | | flow rate of collection liquid/ absorption oil | distribution of heavy hydrocarbons | |
|---|---|---|---|---|---|
| | flow rate | content of heavy hydrocarbon | | to fuel gas | to collection liquid/ absorption oil |
| | (kg/h) | (wt%) | (kg/h) | (wt%) | (wt%) |
| Ex. 1 | 14940 | 2.34 | 344 | 52.9 | 47.1 |
| Ex. 2 | 14627 | 0.06 | 657 | 1.4 | 98.6 |
| Ex. 3 | 14716 | 1.52 | 10568 | 33.9 | 66.1 |
| Ex. 4 | 14411 | 0.53 | 10873 | 11.5 | 88.5 |
| Ex. 5 | 14550 | 0.53 | 10734 | 11.7 | 88.3 |
| Ex. 6 | 14544 | 1.02 | 20740 | 22.6 | 77.4 |
| Ex. 7 | 14237 | 0.32 | 21047 | 6.8 | 93.2 |
| Ex. 8 | 14362 | 0.09 | 20922 | 2.0 | 98.0 |

This application claims the benefit of Japanese Patent Application No. 2011-078804, filed March 31, 2011, which is hereby incorporated by reference herein in its entirety.

**Claims**

1.  A method of producing various hydrocarbon oils from natural gas comprising:

    a synthesis gas production step of producing synthesis gas containing hydrogen and carbon monoxide as main components by causing natural gas containing methane as main component to react with steam and/or carbon dioxide in a heated reformer tube filled with a reforming catalyst;
    a Fischer-Tropsch synthesis step of producing Fischer-Tropsch oil by subjecting the synthesis gas produced in the synthesis gas production step to a Fischer-Tropsch synthesis reaction and subsequently separating FT off gas containing gaseous products and unreacted synthesis gas; and
    an upgrading step of producing various hydrocarbon oils by subjecting the Fischer-Tropsch oil to a hydrotreating, hydroisomerization and hydrocracking process, wherein
    the FT off gas is recycled as a fuel for heating the reformer tube after heavy hydrocarbons contained in the FT off gas is removed.

2.  The method according to claim 1, wherein the heavy hydrocarbons are hydrocarbons having five or more carbon atoms per molecule.

3.  The method according to claim 1 or 2, wherein the heavy hydrocarbons are removed by bringing the FT off gas into contact with absorption oil directly.

4.  The method according to claim 3, wherein the absorption oil is one of kerosene and gas oil.

5.  The method according to claim 1 or 2, wherein the heavy hydrocarbons are removed by distilling the FT off gas.

6.  The method according to any one of claims 1 through 4, wherein the heavy hydrocarbons are removed by cooling the FT off gas.

7.  The method according to claim 1 or 2, wherein the heavy hydrocarbons are removed from the FT off gas by adsorption.

8.  The method according to claim 7, wherein an adsorbent used for the adsorption is active carbon.

FIG. 1

FIG. 2

FIG. 3

FIG. 4

FUEL GAS

ABSORPTION OIL

(COOLING)

ABSORPTION OIL
+ HEAVY HYDROCARBONS

FT OFF GAS

FIG. 5

FUEL GAS

ABSORPTION OIL

FT OFF GAS

ABSORPTION OIL
+ HEAVY HYDROCARBONS

## INTERNATIONAL SEARCH REPORT

| International application No. |
| --- |
| PCT/JP2012/001965 |

A.  CLASSIFICATION OF SUBJECT MATTER
*C10G2/00*(2006.01)i

According to International Patent Classification (IPC) or to both national classification and IPC

B.  FIELDS SEARCHED

Minimum documentation searched (classification system followed by classification symbols)
C10G2/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2007-529594 A  (Compact GTL PLC.),<br>25 October 2007 (25.10.2007),<br>entire text<br>& WO 2005/090522 A1   & AU 2005223463 A<br>& EP 1725634 A1   & KR 10-2006-0126604 A<br>& NO 20064658 A   & RU 2006136143 A<br>& US 2005/0209347 A1 | 1-8 |
| Y | JP 2007-530709 A  (Chevron USA Inc.),<br>01 November 2007 (01.11.2007),<br>paragraphs [0030] to [0031]<br>& US 6822006 B1   & GB 2421201 A<br>& WO 2005/003702 A2   & NL 1026568 A<br>& ZA 200600305 A   & AU 2004254637 A | 1-8 |

| ☒  Further documents are listed in the continuation of Box C. | ☐  See patent family annex. |
| --- | --- |

| | |
| --- | --- |
| *     Special categories of cited documents:<br>"A"    document defining the general state of the art which is not considered<br>       to be of particular relevance<br>"E"    earlier application or patent but published on or after the international<br>       filing date<br>"L"    document which may throw doubts on priority claim(s) or which is<br>       cited to establish the publication date of another citation or other<br>       special reason (as specified)<br>"O"    document referring to an oral disclosure, use, exhibition or other means<br>"P"    document published prior to the international filing date but later than<br>       the priority date claimed | "T"    later document published after the international filing date or priority<br>       date and not in conflict with the application but cited to understand<br>       the principle or theory underlying the invention<br>"X"    document of particular relevance; the claimed invention cannot be<br>       considered novel or cannot be considered to involve an inventive<br>       step when the document is taken alone<br>"Y"    document of particular relevance; the claimed invention cannot be<br>       considered to involve an inventive step when the document is<br>       combined with one or more other such documents, such combination<br>       being obvious to a person skilled in the art<br>"&"    document member of the same patent family |

| Date of the actual completion of the international search | Date of mailing of the international search report |
| --- | --- |
| 18 April, 2012 (18.04.12) | 01 May, 2012 (01.05.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

International application No.

PCT/JP2012/001965

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2007/114277 A1  (Nippon Steel Engineering Co., Ltd.), 11 October 2007 (11.10.2007), paragraph [0045] & AU 2007232926 A        & CN 101432402 A & ZA 200808234 A        & RU 2008140160 A | 1-8 |
| Y | US 2577634 A  (W.G.Scharmann), 04 December 1951 (04.12.1951), entire text (Family: none) | 3,4,7,8 |

Form PCT/ISA/210 (continuation of second sheet) (July 2009)

**EP 2 692 833 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011078804 A